# EUROPÄISCHE PATENTSCHRIFT

(11) **EP 0 443 187 B1**
(45) Veröffentlichungstag und Bekanntmachung des Hinweises auf die Patenterteilung: **26.04.1995**
(21) Anmeldenummer: 90125160.3
(22) Anmeldetag: 21.12.1990
(51) Int. Cl.: H04B 7/26

(54) **Datenübertragungs-Funksystem für Kraftfahrzeuge sowie-Funk-Sende- und/oder Empfangsgerät eines Kraftfahrzeugs**
Radio data transmission system for vehicule as well as radio transmitter-receiver of a motor vehicle automobile
Système radio de transmission de données pour véhicules automobiles ainsi que dispositif d'émission-réception radio d'un véhicule

(30) Priorität: 21.02.1990 DE 4005397
(43) Veröffentlichungstag der Anmeldung: 28.08.1991
(73) Patentinhaber: Bayerische Motoren Werke Aktiengesellschaft, 80788 München (DE)
(72) Erfinder: Wiesmeier, Christian, W-8000 München 90 (DE); Obert, Georg, W-8000 München 40 (DE)

(56) Entgegenhaltungen:
- EP-A- 0 300 205
- DE-A- 1 015 505
- DE-A- 2 850 258
- FUNKTECHNIK Bd. 41, Nr. 6, 1. Juni 1986, HEIDELBERG,DE Seiten 273 - 278; C.REUBER: 'Elektronik für Information und Navigation im Auto '
- INTERNATIONALES VERKEHRSWESEN Bd. 37, Nr. 5, 1. September 1985, DE Seiten 336 -343; P. BRÄGAS: 'Leit- und Informationssysteme im Kraftfahrzeugsbau- einBeitrag zur Verbesserung des Verkehrsablaufs '

## Beschreibung

Die Erfindung bezieht sich auf ein Datenübertragungs-Funksystem für Kraftfahrzeuge nach dem Oberbegriff des Patentanspruchs 1.

Derartige Systeme sind etwa im Zusammenhang mit Autoradios oder Funktelefonen bekannt.

Bei weiterhin zunehmendem Straßenverkehrsaufkommen und/oder Ausstattungsgrad der Kraftfahrzeuge mit drahtlosen Datenübertragungseinrichtungen kann das Aufkommen an übertragenen, d.h. empfangenen und gesendeten, Daten solche Ausmaße erreichen, daß für den einzelnen Teilnehmer, d.h. Empfänger oder Sender, der zeitliche Aufwand zur Verarbeitung der Informationsfülle den Nutzen der Informationsübertragung in Frage zu stellen beginnt.

Ausgehend von dieser Problematik löst die Erfindung die Aufgabe, Datenübertragungs-Funksysteme der eingangs genannten Art dahingehend zu verbessern, daß die Datenübertragung zu und/oder von Automobilen Systemteilnehmern zumindest gruppenselektiv möglich ist, d.h. im wesentlichen jeweils nur einen solchen Kreis von Systemteilnehmern erfaßt, den die Datenübertragung hauptsächlich betreffen soll.

Diese Aufgabe wird durch die kennzeichnenden Merkmale des Patentanspruchs 1 gelöst.

Es sei hervorgehoben, daß jeder angesprochene Datenübertragungs-Kanal erfindungsgemäß einer bestimmten globalen geographischen Fahrtrichtung von Kraftfahrzeugen, und nicht etwa ihrem Aufenthaltsort, zugeordnet ist. Es geht also i.a. nicht darum, die Abstrahlung bzw. den Empfang des Datenübertragungs-Kanals selbst räumlich auszurichten oder sonstwie räumlich zu beschränken. Vielmehr wird gerade eine Rundumabstrahlung bzw. ein Rundumempfang normalerweise das Mittel der Wahl sein, um eine fahrtrichtungsspezifische Information unabhängig von der Relativlage zwischen Sender und Empfänger zu übertragen. Nur fakultativ kann ggf. etwa als zusätzliche Selektionsmaßnahme eine räumlich beschränkte z.B. zonale oder sektorale, Nutzung eines Datenübertragungs-Kanals vorgesehen werden, falls auch noch ein solches Kriterium erfüllt werden soll.

Aus der EP-A 0 300 205 ist ein Verfahren zur fahrtroutenselektiven Wiedergabe von Verkehrsnachrichten sowie ein zugehöriger Fahrzeugempfänger bekannt, bei dem dem Fahrer über eine optische und/oder akustische Ausgabeeinrichtung die ihn betreffende Verkehrsnachricht vermittelt wird. Die Fahrtroute ist dabei vor Beginn der Fahrt einzugeben. Verläßt der Fahrer die vorgegebene Fahrtroute, so erhält er keinerlei Information über seine "neue" Fahrtroute.

Es ist ferner aus der Zeitschrift Funktechnik, Band 41, 1986, S. 273 bis 278 bekannt, im Rahmen eines Navigationssystems einen Kompaß einzusetzen, um die Fahrtroute und die Fahrtrichtung miteinander in Beziehung zu setzen.

Ein Vorteil der erfindungsgemäßen Lösung liegt in der Möglichkeit, Datenübertragungen in der Weise selektiv durchzuführen, daß auf einem Übertragungs-Kanal im wesentlichen nur solche Informationen übertragen werden, die mit Bezug auf eine bestimmte zugeordnete geographische Fahrtrichtung für eine Teilmenge von Systemteilnehmern von Belang sind. Auch bei einem insgesamt zunehmendem Datenübertragungs-Aufkommen kann der Auswertungsaufwand des einzelnen Systemteilnehmers dann auf einem akzeptablen Niveau gehalten werden.

Hierbei ist z.B. an Verkehrsdurchsagen zu denken, die von einem Sender, insbesondere einem stationären Sender, an mit Datenübertragungseinrichtungen ausgestattete Verkehrsteilnehmer gerichtet werden. Durch die Zuordnung von Übertragungskanälen zu geographischen Fahrtrichtungen kann der Sender fahrtrichtungsspezifische Informationen auf getrennten Kanälen verbreiten, und der einzelne Verkehrsteilnehmer kann eine fahrtrichtungsspezifische Information gezielt entgegennehmen und braucht somit keine Informationen mehr zu sichten, die sich auf eine für ihn momentan weniger bedeutsame geographische Fahrtrichtung beziehen. Beispielsweise braucht einem nach Norden fahrenden Verkehrsteilnehmer ein in südlicher Fahrtrichtung bestehender Stau nicht mitgeteilt zu werden.

Zu denken ist aber auch an dialogfähige Kraftfahrzeug-Kommunikationssysteme, die bei weiterhin zunehmendem Verkehrsaufkommen und fortschreitender Elektronisierung Einzug in das Verkehrswesen halten. Diese schließen Datenübertragungen sowohl von Kraftfahrzeugen zu stationären Sendern als auch von Kraftfahrzeug zu Kraftfahrzeug ein.

So können beispielsweise an einer Straße aufgestellte sende- und empfangsfähige Stationen (Baken) von einem Kraftfahrzeug mit erfindungsgemäßer Datenübertragungseinrichtung unter Bezugnahme auf eine bestimmte geographische Fahrtrichtung, d.h. unter Benutzung eines zugeordneten Übertragungskanals, angesprochen werden, um fahrtrichtungsspezifische Informationen auf einem zugeordneten Übertragungskanal zurückzuerhalten.

Einer geographischen Fahrtrichtung kann auch ein Paar von Übertragungskanälen - ein Sendekanal und ein Empfangskanal - zugeordnet sein, wenn eine mobile oder ortsfeste Station auch während eines Sendevorgangs selbst ansprechbar und empfangsbereit bleiben soll.

Bei Dialog von Kraftfahrzeug zu Kraftfahrzeug kann durch die erfindungsgemäße fahrtrichtungsspezifische Kanalzuordnung die auf Landstraßen und Autobahnen bestehende Gefahr ausgeschlossen werden, daß im Datenaustausch befindliche Fahrzeuge einer Fahrtrichtung durch entgegenkommende, ebenfalls kommunizierende Fahrzeuge beeinträchtigt werden. Der Informationsaustausch von Fahrzeugen unterschiedlicher Fahrtrichtungen wird also gezielt entkoppelt. Demgegenüber könnte selbst eine räumlich gerichtete Übertragung (auch mittels Infrarotstrahlen, Mikrowellen oder Ultraschallwellen), die beispielsweise nur nach vorne abgestrahlt und heckseitig empfangen würde, infolge unerwünschter Reflexionen zu Störungen führen.

Als Übertragungskanäle für die Zuordnung zu unterschiedlichen geographischen Fahrtrichtungen eignen sich z.B. unterschiedliche Trägerfrequenzen von Funkwellen. Aber auch unterschiedliche Trägerfrequenzen modulierbarer Lichtwellen könnten einer entsprechenden Zahl von Übertragungskanälen zugeordnet werden. Jede Art von Modulation (Amplituden-, Frequenz-, Pulscode-Modulation etc.) kann Verwendung finden.

Anstelle des soeben genannten Frequenzmultiplex-Betriebs kommt auch ein Zeitmultiplexbetrieb in Betracht, bei dem auf einer einzelnen Trägerfrequenz mehrere Übertragungskanäle in Form einer periodischen Abfolge von Zeitschlitzen bereitgestellt werden, wie sie insbesondere bei digitaler Datenübertragung eingerichtet werden können.

Alternativ können bei Benutzung einer einzelnen Trägerfrequenz mehrere Kanäle durch unterschiedliche Kennungen für Datenblöcke oder durch unterschiedliche Verfahren einer Datenkodierung unterscheidbar gemacht werden. Im CDMA-Verfahren (Spreizbandtechnik, Code Division Multiplex) wird jedem Kanal ein bestimmtes Codewort zugeordnet. Dann können sich nur Sender und Empfänger verständigen, die bei Codierung und Decodierung den gleichen Code verwenden. Davon abweichende Empfänger interpretieren das Signal als erhöhte Rauschleistung.

Auch andere Formen der Bereitstellung einer Mehrzahl von Übertragungskanälen kommen für deren Zuordnung zu einer entsprechenden Anzahl von geographischen Fahrtrichtungen in Betracht. Eine bevorzugte Anzahl sind in jedem Fall vier Übertragungskanäle für vier globale geographische Fahrtrichtungen; nämlich beispielsweise die vier Haupthimmelsrichtungen.

Beabsichtigt ein Verkehrsteilnehmer eine Datenübertragung, z.B. den Empfang einer Verkehrsdurchsage oder eine Absendung eigener Daten, mit Bezug auf eine bestimmte geographische Fahrtrichtung, so kann er den zugeordneten Übertragungskanal z.B. mittels eines Tastschalters oder einer sonstigen Eingabevorrichtung manuell auswählen oder auswählen lassen. Die geographische Fahrtrichtung braucht nicht mit seiner momentanen Bewegungsrichtung zusammenzuhängen, sei es, daß die Straßenführung momentan von der generellen Reiserichtung abweicht, oder daß der Verkehrsteilnehmer bewußt, etwa vor Erreichen eines Autobahnkreuzes, Informationen über die Verkehrslage in einer anderen als seiner Bewegungsrichtung erfahren möchte, oder daß er an einer Landstraßenkreuzung den Querverkehr ansprechen möchte, oder daß er den Gegenverkehr ansprechen möchte, um etwa einen Überholvorgang anzumelden etc. Auch kann die Möglichkeit vorgesehen werden, z.B. nach einem eigenen oder beobachteten Unfall einen Rundruf auf allen Fahrtrichtungskanälen oder nur auf den zwei der Bewegungsrichtung und der Gegenrichtung zugeordneten Kanälen auszusenden.

Im allgemeinen wird für einen Verkehrsteilnehmer die geographische Fahrtrichtung, die der Bewegungsrichtung seines Kraftfahrzeugs entspricht, bei einer fahrtrichtungsspezifischen Datenübertragung am meisten von Interesse sein, sei es beim selektiven Empfang von Verkehrsdurchsagen oder beim möglichst ungestörten, überlagerungsfreien Dialog mit einem stationären Sendeempfänger oder mit einem weiteren Verkehrsteilnehmer, der in der gleichen Richtung unterwegs ist.

In einer geringeren Anzahl von Situationen wird die der aktuellen Bewegungsrichtung entgegengesetzte Fahrtrichtung für die fahrtrichtungsspezifische Datenübertragung von Bedeutung sein, etwa zur ungestörten, überlagerungsfreien Kommunikation mit dem Gegenverkehr oder zum Empfang von die Gegenrichtung betreffenden Verkehrsdurchsagen im Hinblick auf eine geplante Rückfahrt etc.

Die aktuelle Bewegungsrichtung - oder wahlweise deren Gegenrichtung (um 180° versetzt) - wird mittels eines Bewegungsrichtungsdetektors im Kraftfahrzeug automatisch erfaßt und einer Auswahlvorrichtung des kraftfahrzeugeigenen Funk-Sende- und/oder Empfangsgeräts vorgegeben werden, um selbsttätig den dieser Fahrtrichtung zugeordneten, im Normalfall relevantesten Übertragungskanal einstellen zu lassen. Als Richtungsdetektor kann ein elektronischer Kompaß Verwendung finden, wie er etwa im Zusammenhang mit modernen Navigationsrechnern gegebenenfalls ohnehin bereits im Kraftfahrzeug zur Verfügung steht.

Vorteilhaft kann die selbsttätig erfaßte Kraftfahrzeug-Bewegungsrichtung aufgrund übertragener Daten korrigiert oder nachgestellt werden.

Da bei einer Fahrtrichtungsänderung eines Kraftfahrzeugs dessen Übergang zwischen zwei benachbarten geographischen Fahrtrichtungen, denen unterschiedliche Übertragungskanäle zugeordnet sind, nicht beliebig genau festgestellt werden kann, werden vorteilhafterweise in einem Überlappungsbereich zwischen diesen zwei Fahrtrichtungen, zumindest zunächst, beide zugeordneten Übertragungskanäle von dem kraftfahrzeugseitigen Funk-Sende- und/oder Empfangsgerät parallel genutzt.

Anhand eines in der Zeichnung dargestellten Ausführungsbeispiels wird die Erfindung nachstehend näher erläutert. Es zeigt
- Fig. 1: ein Veranschaulichung der Zuordnung von beispielshalber vier Übertragungskanälen zu vier geographischen Fahrtrichtungen und
- Fig. 2: einen Schaltungsvorschlag für ein kraftfahrzeugseitiges Funk-Sende- und/oder Empfangsgerät, das für eine Zuordnung von Übertragungskanälen zu geographischen Fahrtrichtungen ausgebildet ist.

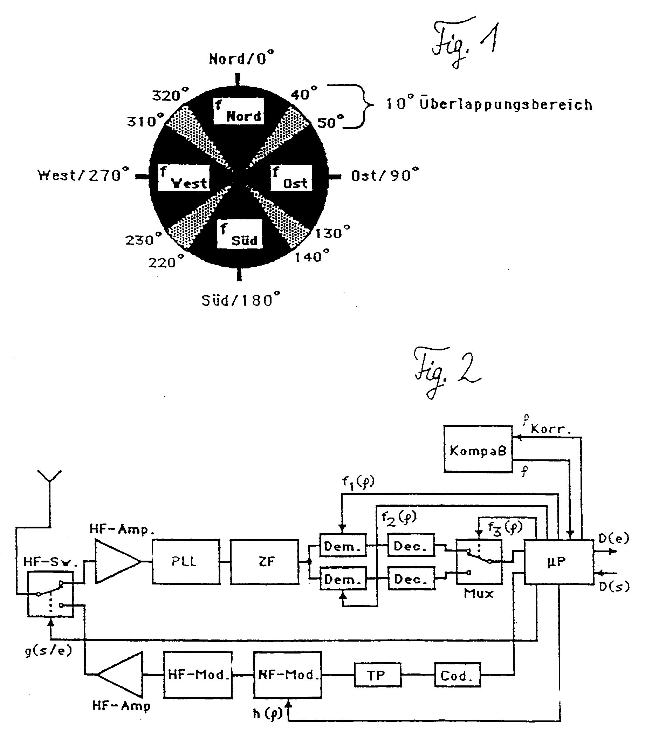

Gemäß Fig.1 sind die möglichen geographischen Fahrtrichtungen in Richtungssektoren oder Kommunikationszonen aufgeteilt. Es werden beispielshalber vier Übertragungskanäle entsprechend den Himmelsrichtungen unterschieden und beispielshalber durch unterschiedliche Trägerfrequenzen f_{NORD}, f_{OST}, f_{SÜD}, f_{WEST} verkörpert, die im allgemeinen Fall rundum flächendeckend abgestrahlt werden. Die Datenübertragungseinrichtung (das Funk-Sende- und/oder Empfangsgerät) des Kraftfahrzeugs erkennt etwa mit Hilfe eines elektronischen Kompasses - wie z.B. in Navigationsgeräten im Einsatz - seine Bewegungsrichtung in Form eines Winkels φ (phi) und stellt mit Hilfe einer Auswahlvorrichtung die zugeordnete Trägerfrequenz ein.

Da bei einer Fahrtrichtungsänderung des Kraftfahrzeugs der Übergang zwischen zwei benachbarten geographischen Fahrtrichtungen, denen unterschiedliche Übertragungskanäle zugeordnet sind, nicht beliebig genau festgestellt werden kann, wird ein schraffiert dargestellter Überlappungsbereich von z.B. ca. 10° Breite zwischen jeweils zwei benachbarten Fahrtrichtungen vorgesehen. In diesem Sektor sendet die Datenübertragungseinrichtung des Kraftfahrzeugs auf einem einzelnen Übertragungskanal, z.B. jenem Kanal, aus dessen zugeordneter Kommunikationszone das Fahrzeug gerade kommt. Empfangsseitig aber hört die Übertragungseinrichtung zusätzlich den Übertragungskanal der benachbarten Kommunikationszone, in die sich das Fahrzeug hineinbewegt, ab. Es kann vorgesehen sein, daß bei Erfassung eines auf dem benachbarten Übertragungskanal arbeitenden Senders die beteiligten Partner sich auf einen der beiden Übertragungskanäle einigen. Die Datenübertragungseinrichtung hört aber zunächst weiterhin beide Übertragungskanäle ab. Erst wenn das Kraftfahrzeug oder eine Mehrzahl kommunizierender Fahrzeuge den 10°-Überlappungsbereich verlassen haben, beschränken sich die involvierten Datenübertragungseinrichtungen wieder ausschließlich auf den jeweiligen zugeordneten geographischen Übertragungskanal.

In derartige Datenübertragungen kann auch ein Austausch von die Richtungsdetektion betreffenden Informationen einbezogen werden. Bei unverhältnismäßig hohen Abweichungen eines Richtungsdetektors gegenüber den Richtungsdetektoren anderer Systemteilnehmer kann eine automatische Korrektur oder Nachstellung vorgesehen werden. Treten solche Abweichungen häufiger auf, kann aufgrund einer solchen Selbstdiagnose auch ein Hinweis an den Benutzer ausgegeben werden, die Anlage überprüfen zu lassen.

In gleicher Weise kann durch Datenaustausch mit stationären Sendeempfangseinrichtungen eine Nachjustierung von Kompassen erfolgen, wenn die stationären Einrichtungen als Teil eines aktiven Infrastruktursystems straßenseitig, beispielsweise auf dem Mittelstreifen einer Autobahn, montiert sind, um wie beschrieben für beide Fahrtrichtungen unterschiedliche Informationen abzustrahlen, z.B. auch hinsichtlich Straßenverlauf oder Verkehrsbeschilderung. In Kenntnis des Straßenverlaufs ist die Nachjustierung durchführbar.

Solange keine fahrzeugautarke Spurerkennung oder Straßenkategorie-Einordnung möglich ist, wird vorgeschlagen, Beginn, Ende und Ausfahrten von Autobahnen durch straßenseitige Bakensender anzuzeigen. Bei den vielerorts üblichen kreisrunden Ausfahrten kann auch die extreme Winkeländerung, evtl. in Verbindung mit der herabgesetzten Geschwindigkeit, ausgewertet werden.

Unter Bezugnahme auf Fig. 2 wird nun ein Schaltungsvorschlag für eine kraftfahrzeugseitige Datenübertragungseinrichtung, die für eine Zuordnung von Übertragungskanälen zu geographischen Fahrtrichtungen ausgebildet ist, beschrieben. Der obere Teil des Schaltungsdiagramms betrifft eine Empfangseinrichtung, der untere Teil eine Sendeeinrichtung.

In der Empfangseinrichtung ist mit HF-Amp ein Hochfrequenzverstärker mit integriertem Breitbandfilter bezeichnet. An diesen schließen sich in Signalflußrichtung ein phasenstarrer Regelkreis PLL (Phase Locked Loop) und eine Zwischenfrequenzstufe ZF an. Es folgen zwei parallele Pfade mit je einem Demodulator Dem und einem Decoder Dec. Diese Pfade führen zum Eingang eines Multiplexers Mux. Ein als Auswahlvorrichtung arbeitender Mikroprozessor »P steht empfangsseitig mit dem Multiplexer Mux und den Demodulatoren Dem in Verbindung.

In der Sendeeinrichtung ist mit Cod ein Coder bezeichnet, an den sich in Signalflußrichtung ein Tiefpaß TP, ein Niederfrequenzmodulator NF-Mod, ein Hochfrequenzmodulator HF-Mod und wiederum ein Hochfrequenzverstärker HF-Amp anschließen. Sendeseitig steht der als Auswahlvorrichtung arbeitende Mikroprozessor »P mit dem Coder Cod und dem Niederfrequenzmodulator NF-Mod in Verbindung.

Ferner ist der Mikroprozessor »P mit einem elektronischen Kompaß und einem zwischen einer Antenne und der Empfangs- bzw. Sendeeinrichtung liegenden Hochfrequenzschalter HF-Sw (Switch) verbunden. Schließlich weist der Mikroprozessor »P der vorgeschlagenen Datenübertragungseinrichtung noch einen Ausgang für empfangene Daten D(e) und einen Eingang für zu sendende Daten D(s) auf.

Im Betrieb verarbeitet die Schaltung im Halbduplexverfahren zu empfangende und zu sendende Daten D(e) bzw. D(s). Abhängig davon, ob gerade empfangen oder gesendet werden soll, legt der Mikroprozessor »P über ein an den Hochfrequenzschalter HF-Sw abgegebenes Steuersignal g(s/e) die Empfangseinrichtung oder die Sendeeinrichtung auf die Antenne.

Im Sendebetrieb werden die digitalen Nutzdaten D(s) - gegebenenfalls nach redundanter Erweiterung um Sicherungsbits - dem Coder Cod zugeführt, der eine Codierungsvorschrift und damit auch die Kanalbandbreite festlegt. Anschließend wird das Sendesignal im Tiefpaß TP einer Bandbegrenzung unterworfen und niederfrequent moduliert. Die Auswahl einer aus vier Modulationsfrequenzen - die vier Übertragungskanälen entsprechen - erfolgt über ein Auswahlsignal h(φ), das der Mikroprozessor »P aus einem Richtungssignal φ des Kompasses bildet. Das am Ausgang des Niederfrequenzmodulators NF-Mod anstehende Sendesignal wird einem starren hochfrequenten Träger aufmoduliert und über einen Breitbandverstärker HF-Amp auf die Antenne gelegt.

Im Empfangsbetrieb wird das Signal von der Antenne über einen Breitbandverstärker HF-Amp einem phasenstarren Regelkreis PLL zugeführt und auf eine Zwischenfrequenz umgesetzt. In der ZF-Stufe wird das Empfangssignal sowohl gefiltert als auch verstärkt. Die zwei sich daran anschließenden parallelen Pfade erlauben die gleichzeitige Demodulation und Decodierung zweier Empfangssignale. Die Auswahl der Empfangsfrequenzen steuert der Mikroprozessor »P - aufgrund des Richtungssignals φ des Kompasses - über Auswahlsignale f₁(φ), f₂(φ) und f₃(φ). Zugleich entnimmt er der u.U. noch redundanten Digitalinformation den Nutzanteil D(e) und leitet sie z.B. an eine hierfür zuständige Auswerteeinheit (nicht dargestellt).

Aus bestimmten Empfangsinformationen, z.B. aus den Richtungsangaben der Kompasse anderer Kraftfahrzeuge oder aus denen stationärer Sendeeinrichtungen, kann der Mikroprozessor »P auch eine Korrektur des Richtungssignals φ des Kompasses durchführen, indem er dem Kompaß ein Korrektursignal φ_{KORR} zuleitet.

## Patentansprüche

1. Datenübertragungs-Funksystem für Kraftfahrzeuge, die mit Datenübertragungseinrichtungen zur Datenübertragung per Funk auf vorbestimmten Übertragungskanälen ausgestrattet sind, sowie Funk-Sende- und/oder Empfangsgerät,
dadurch gekennzeichnet, daß die Übertragungskanäle vorbestimmten geographischen Fahrtrichtungen (φ) eines Kraftfahrzeugs zugeordnet sind, daß das Funk-Sende- und/oder Empfangsgerät eine Auswahl-Vorrichtung (»P) zur Auswahl eines einer geographischen Fahrtrichtung (φ) zugeordneten Datenübertragungskanals besitzt und daß die Auswahlvorrichtung (»P) von einem Richtungsdetektor, insbesondere elektronischen Kompaß, gesteuert auf die Fahrtrichtung (φ) des Kraftfahrzeugs einstellbar ist.

2. Datenübertragungs-Funksystem nach Anspruch 1, dadurch gekennzeichnet, daß mindestens zwei, vorzugsweise vier, vorbestimmten geographischen Fahrtrichtungen (φ) unterschiedliche Trägerfrequenzen (f_{NORD}, f_{OST}, f_{SÜD}, f_{WEST}) eindeutig zugeordnet sind.

3. Datenübertragungs-Funksystem nach Anspruch 1, dadurch gekennzeichnet, daß mindestens zwei, vorzugsweise vier, vorbestimmten geographischen Fahrtrichtungen (φ) unterschiedliche Zeitmultiplexkanäle oder unterschiedliche Datenkennungen oder Datenkodierungen eindeutig zugeordnet sind.

4. Datenübertragungs-Funksystem nach einem der vorhergehenden Ansprüche, gekennzeichnet durch ortsfeste Sender, die ausgebildet sind, auf den vorbestimmten Übertragungskanälen Daten an Kraftfahrzeuge zu senden.

5. Datenübertragungs-Funksystem nach Anspruch 4, dadurch gekennzeichnet, daß die ortsfesten Sender straßenseitig angeordnete Bakensender sind.

6. Datenübertragungs-Funksystem nach Anspruch 5, dadurch gekennzeichnet, daß die Bakensender auch Einrichtungen zum Empfang von Daten auf geographischen Fahrtrichtungen (φ) zugeordneten Übertragungskanälen aufweisen.

7. Datenübertragungs-Funksystem nach Anspruch 6, dadurch gekennzeichnet, daß die Bakensender ausgebildet sind, in Reaktion auf den Empfang von Daten auf einem einer geographischen Fahrtrichtung (φ) zugeordneten Übertragungskanal ihrerseits Daten auf einem dieser geographischen Fahrtrichtung (φ) zugeordneten Übertragungskanal auszusenden.

8. Datenübertragung-Funksystem für Kraftfahrzeuge nach Anspruch 1, dadurch gekennzeichnet, daß die Auswahlvorrichtung (»P) einen Datenübertragungskanal auswählt, der einer zur Fahrtrichtung (Φ) des Kraftfahrzeugs entgegengesetzten Fahrtrichtung zugeordnet ist.

9. Datenübertragungs-Funksystem nach Anspruch 1, dadurch gekennzeichnet, daß der Richtungsdetektor aufgrund übertragener Daten korrigierbar ist.

10. Datenübertragungs-Funksystem nach Anspruch 1, dadurch gekennzeichnet, daß die Auswahlvorrichtung (»P) ausgebildet ist, in einem Überlappungsbereich (10°) zwischen zwei benachbarten Hauptfahrtrichtungen zunächst beide zugeordneten Übertragungskanäle parallel zu nutzen und dann einen aus diesen auszuwählen.

## Claims

1. A radio data transmission system for motor vehicles which are fitted with data transmission devices for radio data transmission on pre-defined transmission channels, as well as a radio transmitting and/or receiving device, characterised in that the transmission channels are assigned to pre-defined geographic directions of travel (φ) of a motor vehicle, that the radio transmitting and/or receiving device is provided with a selection device (»P) for the selection of a data transmission channel assigned to a geographic direction of travel (φ), and that the selection device (»P) of the motor vehicle can be adjusted by means of a direction detector, preferably an electronic compass with respect to the direction of travel (φ).

2. A radio data transmission system according to claim 1, characterised in that different carrier frequencies (f_{NORTH}, F_{EAST}/ F_{SOUTH} and F_{WEST}) are clearly assigned to at least two and preferably four pre-defined geographic directions of travel (φ).

3. A radio data transmission system according to claim 1, characterised in that different time division multiplex channels or different data identifiers or data codes are clearly assigned to at least two, and preferably four, pre-defined geographic directions of travel (φ).

4. A radio data transmission system according to any one of the preceding claims, characterised by stationary transmitters which are adapted to transmit data to motor vehicles on the pre-defined transmission channels.

5. A radio data transmission system according to claim 4, characterised in that the stationary transmitters are beacon transmitters arranged along the road.

6. A radio data transmission system according to claim 5, characterised in that the beacon transmitters are also provided with devices to receive data on transmission channels assigned to geographic directions of travel (φ).

7. A radio data transmission system according to claim 6, characterised in that the beacon transmitters can respond to the receipt of data on a transmission channel assigned to a geographic direction of travel (φ) by in turn transmitting data on a transmission channel assigned to that geographic direction of travel (φ).

8. A radio data transmission system for motor vehicles according to claim 1, characterised in that the selection device (»P) selects a data transmission channel which is assigned to a direction of travel opposite to the direction of travel (φ) of the motor vehicle.

9. A radio data transmission system according to claim 1, characterised in that the direction detector can be corrected on the basis of transmitted data.

10. A radio data transmission system according to claim 1, characterised in that the selection device (»P) is designed so that, within an overlap zone (10°) between two neighbouring main directions of travel, it initially uses both assigned transmission channels in parallel and then selects one of them.

## Revendications

1. Système radio de transmission de données pour véhicules automobiles équipés d'installations de transmission de données pour la transmission de données par radio sur des canaux de transmission prédéterminés, ainsi qu'appareils radio d'émission et/ou de réception, caractérisé en ce que les canaux de transmission sont associés à des directions de circulation géographiques prédéterminées (φ) d'un véhicule , l'appareil radio d'émission et/ou de réception comporte un dispositif sélecteur (»P) pour sélectionner le canal de transmission de données associé à une direction de circulation géographique (φ), et il est commandé par un détecteur directionnel, notamment un compas électronique, qui règle la direction de circulation (φ) du véhicule.

2. Système radio de transmission de données selon la revendication 1, caractérisé en ce qu'au moins deux et de préférence quatre directions de circulation géographiques (φ) prédéterminées, ont des fréquences porteuses différentes (f_{NORD}, f_{EST}, f_{SUD}, f_{OUEST})

3. Système radio de transmission de données selon la revendication 1, caractérisé en ce qu'au moins deux, et de préférence quatre directions de circulation géographiques prédéterminées (φ), ont des canaux en multiplexage dans le temps, différents ou des caractéristiques de données différentes ou des décodages de données différents suivant une association biunivoque.

4. Système radio de transmission de données selon l'une des revendications précédentes, caractérisé par des émetteurs fixes qui émettent des données vers les véhicules sur des canaux de transmission prédéterminés.

5. Système radio de transmission de données selon la revendication 4, caractérisé en ce que les émetteurs fixes sont des émetteurs équipant le bord de la route.

6. Système radio de transmission de données selon la revendication 5, caractérisé en ce que les émetteurs fixes comportent des installations pour la réception de données sur les canaux de transmission associés à des directions de circulation géographiques (φ).

7. Système radio de transmission de données selon la revendication 6, caractérisé en ce que les émetteurs fixes sont réalisés pour émettre en réaction à la réception de données dans un canal de transmission associé à une direction de circulation géographique (φ), sur le canal de transmission associé à cette direction de déplacement géographique (φ).

8. Système radio de transmission de données pour véhicules automobiles selon la revendication 1, caractérisé en ce que les dispositifs sélecteurs (»P) sélectionnent un canal de transmission de données qui est associé à une direction de circulation opposée à la direction de circulation (φ) du véhicule automobile.

9. Système radio de transmission de données selon la revendication 1, caractérisé en ce que le détecteur directionnel peut être corrigé sur la base de données transmises.

10. Système radio de transmission de données selon la revendication 1, caractérisé en ce que le dispositif sélecteur (»P) est réalisé pour que, dans une zone de chevauchement (10°) entre deux directions de circulation principales voisines, au moins les deux canaux de transmission associés sont utilisés en parallèle pour sélectionner l'un d'entre eux.
